# EUROPÄISCHE PATENTANMELDUNG

(11) **EP 1 111 692 A2**
(43) Veröffentlichungstag der Anmeldung: **27.06.2001**
(21) Anmeldenummer: 00204471.7
(22) Anmeldetag: 12.12.2000
(51) Int. Cl.: H01L 41/09

(54) **Aktuator mit einer Kugel und piezo-elektrischen Antrieben**

(30) Priorität: 21.12.1999 DE 19961684
(71) Anmelder: Philips Corporate Intellectual Property GmbH, 52064 Aachen (DE); Koninklijke Philips Electronics N.V., 5621 BA Eindhoven (NL)
(72) Erfinder: Ackermann, Bernd, Dr., Philips Corporate, 52064 Aachen (DE); Diefenbach, Gerhard, Philips Corporate, 52064 Aachen (DE); Lewalter, Astrid, Philips Corporate, 52064 Aachen (DE); Reichinger, Christian, Dr., Philips Corporate, 52064 Aachen (DE)
(74) Vertreter: Gössmann, Klemens

(57) **Zusammenfassung**

Die Erfindung betrifft einen Aktuator mit mehreren piezo-elektrischen Antrieben (1a, 1b, 1c) und einer Kugel (2), die um mindestens zwei Rotationsachsen (7a, 7b, 7c) drehbar ist, sowie eine Anordnung zur Übertragung von Bild und Ton mit einem Aktuator. Der Aktuator soll flexibel einsetzbar und möglichst kostengünstig zu realisieren sein. Dazu sind mindestens zwei piezo-elektrische Antriebe (1a, 1b, 1c) vorgesehen, welche die Kugel (2) beliebig drehen können, wobei die piezo-elektrischen Antriebe (1a, 1b, 1c) ihre Kraft mittels Reibung durch Schwingungen in Tangentialrichtung bezüglich der Oberfläche der Kugel (2) auf dieselbe zur Drehung dieser Kugel (2) um jeweils eine Rotationsachse übertragen können.

## Beschreibung

Die Erfindung betrifft einen Aktuator mit mehreren piezo-elektrischen Antrieben und einer Kugel, die um mindestens zwei Rotationsachsen drehbar ist, sowie eine Kameraanordnung und eine Anordnung zur Übertragung von Bild und Ton mit einem Aktuator.

Gebäude werden oft rund um die Uhr per Videokamera überwacht. Dazu sind im Innen- und Außenbereich dieser Gebäude zahlreiche Videokameras angebracht, welche die gewünschten Bereiche erfassen. Diese Videokameras sind auf Drehgestellen montiert, welche mittels Elektromotoren gedreht und geschwenkt werden können, um der Videokamera einen möglichst großen Überwachungsbereich zu ermöglichen. Die Mechanik dieser Drehgestelle benötigt viel Platz und erlaubt z.B. keine versenkte Montage in einer Wand. Außerdem erlauben elektrische Getriebemotoren nur mit hohem mechanischem Aufwand eine geschmeidige und kontinuierliche Drehbewegung der Videokamera, benötigen relativ viel elektrische Energie und bedürfen einer regelmäßigen Wartung. Diese mechanisch aufwendige Lösung bedingt einen hohen Preis und ist daher für eine Massenfertigung unattraktiv.

Als Alternative zu elektrischen Getriebemotoren kommen unter anderem piezo-elektrische Stellantriebe in Frage, die eine kontinuierliche und gut steuerbare Drehbewegung zulassen und sehr wartungsarm sind. Allerdings erfordern piezo-elektrische Stellantriebe eine gewisse Anpresskraft, da sie ihre Kraft durch Reibung übertragen.

Aufgabe der vorliegenden Erfindung ist es, einen flexibel einsetzbaren und möglichst kostengünstig zu realisierenden Aktuator zu schaffen.

Die Aufgabe wird erfindungsgemäß dadurch gelöst, dass mindestens zwei piezo-elektrische Antriebe dazu vorgesehen sind, die Kugel um mindestens zwei Rotationsachsen zu drehen, wobei die piezo-elektrischen Antriebe ihre Kraft mittels Reibung durch Schwingungen in Tangentialrichtung bezüglich der Oberfläche der Kugel auf dieselbe zur Drehung dieser Kugel um jeweils eine Rotationsachse übertragen können.

So kann mit nur zwei piezo-elektrischen Antrieben, gleichbedeutend mit zwei verschiedenen raumfesten Rotationsachsen, und einem dritten reibungsarm kugelgelagerten Auflagepunkt eine räumliche Drehung der Kugel erreicht werden. Die tangentiale Kraftübertragung der piezo-elektrischen Antriebe erlaubt außerdem ein hohes Drehmoment, da der volle Radius der Kugel als Hebelarm zur Verfügung steht.

Ferner ist vorgesehen, als piezo-elektrische Antriebe Coupled-Resonance Piezomotoren (CRP) zu verwenden, welche in einer ersten Betriebsart ihre Kraft in tangentialer Richtung auf die Oberfläche der Kugel übertragen, in einer zweiten Betriebsart Longitudinalschwingungen ausführen und in abgeschaltetem Zustand die Kugel selbsthemmend in der zuletzt erreichten Position fixieren können.

Die erste Betriebsart ermöglicht die Drehung der Kugel, während die zweite Betriebsart den Vorteil bietet, durch Longitudinalschwingungen die Reibung eines nicht drehenden Piezomotors zwischen diesem und der Kugel zu reduzieren. Das verbessert die Positioniergenauigkeit der Kugel und verringert die erforderliche Leistung der Piezomotoren. Sind die Piezomotoren abgeschaltet, so verhindert die Reibung zwischen Motor und Kugel, dass sich die Position der Kugel ungewollt verändert.

In einer weiteren Ausgestaltung der Erfindung sind die Piezomotoren im Innern der Kugel angeordnet, und es ist eine Kraftübertragung von den Piezomotoren auf die Innenseite einer die Kugel umgebenden Schale vorgesehen.

Diese Ausführungsform eines Aktuators ist dann vorteilhaft, wenn die Kugel groß ist und die Piezomotoren im Innern der Kugel genügend Raum finden. Außerhalb der Kugel und der sie umgebenden Schale sind keine Halterungen für Piezomotoren erforderlich, wodurch die Baugröße des Aktuators auf die Größe der umgebenden Schale reduziert wird.

In einer weiteren Ausgestaltung der Erfindung sind die Piezomotoren so angeordnet, dass drei senkrecht aufeinander stehende Rotationsachsen vorhanden sind und drei Piezomotoren derart angesteuert werden, dass ein erster Piezomotor eine Rotationsbewegung um eine Rotationsachse ausführt, während ein zweiter Piezomotor, dessen tangentiale Schwingungsebene parallel zu dieser Rotationsachse verläuft, mittels Longitudinalschwingungen die Reibung in dem zu dem zweiten Motor gehörenden Auflagepunkt der Kugel reduziert und ein dritter in der Rotationsachse gelegener Piezomotor in abgeschaltetem Zustand die Rotationsachse in dem zu dem dritten Motor gehörenden Auflagepunkt der Kugel stabilisiert.

Diese besonders vorteilhafte Ausgestaltung ermöglicht eine besonders einfache Steuerung der Drehbewegung der Kugel, da hier immer nur ein Piezomotor um eine der drei orthogonalen raumfesten Rotationsachsen dreht. Gleichzeitig sorgt ein abgeschalteter Motor dafür, dass die Rotationsachse, um die gerade gedreht wird, in dem Auflagepunkt dieses Motors stabilisiert wird. Das erhöht die Präzision der Drehbewegung. Der dritte vorhandene Motor führt dabei Longitudinalschwingungen aus, so dass die zwischen ihm und der Kugel vorhandene Reibung auf ein Minimum reduziert wird. Die Longitudinalschwingungen sorgen nämlich für ein Abheben der Kugel von dem schwingenden Piezomotor. Die orthogonale Anordnung der Rotationsachsen vereinfacht ihre Koordination bei Drehbewegungen, die aus einer Rotation um mehrere Rotationsachsen zusammengesetzt sind.

Des weiteren ist vorgesehen, dass von der Kugel auf die Piezomotoren eine Anpresskraft einwirkt, welche von der eigenen Gewichtskraft der Kugel, durch einen Magneten oder durch eine auf der zu drehenden Kugel gelagerte zweite Kugel aufgebracht wird.

Falls das Eigengewicht der Kugel nicht für eine ausreichende Anpresskraft auf die Piezomotoren sorgt, kann durch einen Magneten oder ein Kugellager die Anpresskraft erhöht werden. Eine höhere Anpresskraft sorgt für eine zuverlässigere Kraftübertragung, wodurch die Drehbewegungen exakter ausgeführt werden.

Es ist außerdem vorteilhaft, eine Anordnung zur Erfassung von Bild und/oder Ton mit einem den obigen Ausführungen entsprechenden Aktuator auszustatten, dessen Kugel dazu vorgesehen ist, eine Kamera und/oder ein Mikrofon aufzunehmen.

Eine Videokamera zur Übertragung von Bild und Ton kann auf diese Art und Weise präzise gedreht und ausgerichtet werden. Auch dabei erweisen sich die verschleißfreien Piezomotoren gegenüber herkömmlichen Elektromotoren als großer Vorteil, da sie zusätzlich in abgeschaltetem Zustand ohne weitere Hilfsmittel die Fixierung der Videokamera in unbewegtem Zustand übernehmen können.

Ausführungsbeispiele der Erfindung werden nachfolgend an Hand einer Figur näher erläutert.

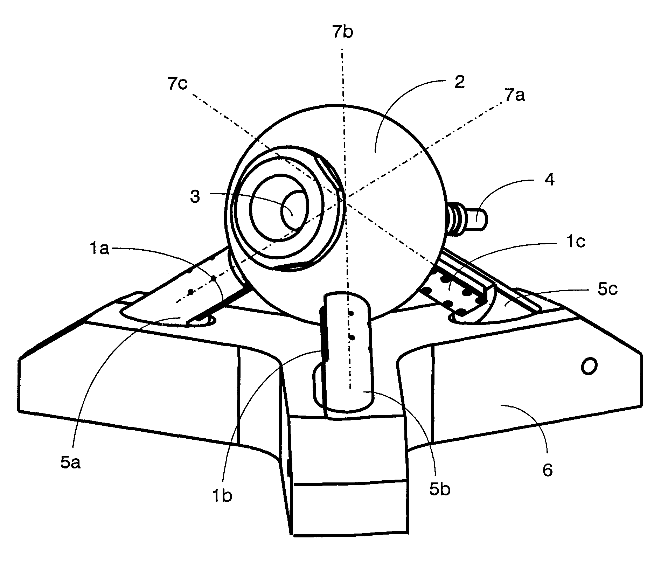

Die Figur zeigt eine Anordnung mit einer digitalen Videokamera 3, die an einen PC, Fernseher oder ein Bildtelefon angeschlossen wird und in alle Richtungen geschwenkt werden kann.

Dadurch wird es möglich, dass die Kamera z.B. bei Videokonferenzen oder beim Erstellen von Videomails dem Benutzer im Raum folgt, so dass dieser sich nicht vor die Kamera setzen muss, sondern im Raum frei bewegen kann. In einer Kugel 2 aus Metall oder einem anderen Material mit einer stoßfesten, harten Oberfläche ist die digitale Videokamera 3 und gegebenenfalls ein in der Figur nicht dargestelltes Mikrofon installiert. Zusätzlich kann auch noch ein Sensor, z.B. ein Infrarotsensor, installiert sein, mit dem die Kamera z.B. zu Überwachungszwecken einer Wärmequelle nachgeführt wird. Die Kugel 2 besitzt eine Ausnehmung zur Aufnahme der Videokamera 3 und gegebenenfalls des Mikrofons sowie eine Durchführung 4 für ein Kabel zur Stromversorgung und zum Datenaustausch. Weiterhin ist die Kugel in drei Punkten auf drei Piezomotoren 1a, 1b, 1c gelagert.

Die Piezomotoren 1a, 1b, 1c sind sogenannte Coupled-Resonance Piezomotoren (CRP), eine spezielle Ausführung piezo-elektrischer Kleinstantriebe. Der vibrierende Teil dieser Piezomotoren besteht aus einer rechteckigen Platte. Die genaue Funktionsweise der Coupled-Resonance Piezomotoren ist der Schrift DE 198 17 038 zu entnehmen.
Die Ausführung der Piezomotoren als CRPs hat den Vorteil, dass mit ihnen zwei Betriebsarten möglich sind. Je nach Art der Ansteuerung können diese Piezomotoren zum einen durch resultierende Schwingungen in tangentialer Richtung bezüglich der Kugeloberfläche die Kugel 2 drehen und zum zweiten Longitudinalschwingungen radial in Richtung auf die Kugel 2 erzeugen. Dadurch wird die Kugel 2 von dem longitudinal schwingenden Piezomotor abgehoben und schwebt fast berührungs- und reibungslos. Wichtig ist, dass beide Betriebsarten mit derselben Resonanzschaltung angeregt werden können.
Die Piezomotoren 1a, 1b, 1c sind in einem orthogonalen Dreibein 5a, 5b, 5c angeordnet. Dabei ruhen sie in Führungen und federnden Gegenlagern, um ein freies ungehindertes Schwingen der Piezomotoren 1a, 1b, 1c zu ermöglichen. Alle Rotationsachsen 7a, 7b, 7c stehen senkrecht aufeinander. So kann die Drehung der Kugel 2 um raumfeste Rotationsachsen 7a, 7b, 7c auf eine besonders vorteilhafte Art und Weise erfolgen. Ein erster Piezomotor, z.B. Motor 1a, dreht die Kugel, während ein zweiter Piezomotor 1b, der sich in derselben Ebene senkrecht zur Rotationsachse 7c befindet und gegen dessen Reibung der erste Motor 1a arbeiten müsste, zur Reduktion der Reibung in reine Longitudinalschwingungen versetzt wird. Ein dritter Piezomotor 1c, dessen Auflagepunkt sich genau in der momentanen Rotationsachse 7c befindet, wirkt nur dann bremsend, wenn sich die Rotationsachse 7c bezüglich der Kugel 2 verändert. Somit dient der dritte Motor 1c im abgeschalteten Zustand dazu, die Rotationsachse 7c zu stabilisieren und eine Abweichung der Kugel 2 von der gewünschten Rotationsachse 7c zu verhindern. Auf diese Art und Weise kann jeder der drei Motoren 1a, 1b, 1c die Kugel 2 um eine zugehörige Rotationsachse drehen, die anderen beiden Motoren arbeiten dann entsprechend als Stabilisator der Rotationsachse bzw. reibungsreduzierend.

Grundsätzlich ist es auch möglich, die Piezomotoren 1a, 1b, 1c im Innern der Kugel 2 anzubringen, wobei sie ihre Kraft dann auf eine die Kugel 2 umgebende Schale übertragen. Da Piezomotoren ihre Kraft durch Reibung übertragen, muss eine ausreichende Anpresskraft zwischen Kugel 2 und den Piezomotoren 1a, 1b, 1c vorhanden sein. Diese Anpresskraft liefert das ausreichend hohe Eigengewicht der Kugel 2, welches die Kugel 2 mit ihrer Oberfläche auf die Piezomotoren 1a, 1b, 1c drückt und so die erforderliche Reibung erzeugt.

Wenn die Kugel 2 nicht schwer genug ist, kann die Anpresskraft dadurch erhöht werden, dass unterhalb der Kugel 2 zwischen dem Dreibein 5a, 5b, 5c der Piezomotoren 1a, 1b, 1c ein Magnet eingebaut ist, der auf die nun metallische Kugel 2 eine Anziehungskraft ausübt.

Falls die Kugel 2 aus einem anderen harten Material wie z.B. Keramik ist, genügt ein kleiner Eisenkern im Innern der Kugel 2, um die Anziehungskraft herzustellen. Als weitere Möglichkeit, für eine ausreichend hohe Anpresskraft zu sorgen, bietet sich der Einbau einer zweiten Kugel an, die oberhalb der Kugel 2 gelagert ist und diese so von oben auf die Piezomotoren 1a, 1b, 1c drückt. Weiterhin ist auch ein Luftlager denkbar, bei dem zwischen die Kugel 2 und ein Lager oberhalb der Kugel 2 mittels eines Kompressors Luft gepresst wird und so die nötige Anpresskraft hergestellt wird. Wird die Kugel 2 nicht bewegt, hemmt sich die gesamte Anordnung auf Grund der Reibung zwischen der Kugeloberfläche und den Piezomotoren 1a, 1b, 1c selbst. Es wird so beim Halten einer erreichten Position keine elektrische Energie verbraucht, und es sind auch keine zusätzlichen Feststellmechanismen erforderlich.

Gegenüber bekannten Aktuatoren weist diese Erfindung den großen Vorteil auf, dass durch die als CRP ausgeführten Piezomotoren zwei Betriebsarten mit einem Motor möglich sind und dass die Betriebsart, in der Longitudinalschwingungen erzeugt werden, eine Drehung der Kugel 2 durch nur einen Piezomotor erlaubt, ohne dass dieser gegen eine starke Reibungskraft der nicht drehenden Motoren ankommen muss. Das erlaubt eine geschmeidige Drehbewegung bei geringem Kraftaufwand und reduziert die benötigte Leistung und damit den Stromverbrauch.

## Patentansprüche

1. Aktuator mit mehreren piezo-elektrischen Antrieben (1a, 1b, 1c) und einer Kugel (2), die um mindestens zwei Rotationsachsen drehbar ist,
dadurch gekennzeichnet,
dass mindestens zwei piezo-elektrische Antriebe (1a, 1b, 1c) dazu vorgesehen sind, die Kugel (2) um mindestens zwei Rotationsachsen (7a, 7b, 7c) zu drehen, wobei die piezo-elektrischen Antriebe (1a, 1b, 1c) ihre Kraft mittels Reibung durch Schwingungen in Tangentialrichtung bezüglich der Oberfläche der Kugel (2) auf dieselbe zur Drehung dieser Kugel (2) um jeweils eine Rotationsachse übertragen können.

2. Aktuator nach Anspruch 1,
dadurch gekennzeichnet,
dass als piezo-elektrische Antriebe (1a, 1b, 1c) Coupled-Resonance Piezomotoren vorgesehen sind, welche in einer ersten Betriebsart ihre Kraft in tangentialer Richtung auf die Oberfläche der Kugel (2) übertragen, in einer zweiten Betriebsart Longitudinalschwingungen ausführen und in abgeschaltetem Zustand die Kugel (2) selbsthemmend in der zuletzt erreichten Position fixieren können.

3. Aktuator nach Anspruch 1 oder 2,
dadurch gekennzeichnet,
dass die Kugel (2) in einer sie umgebenden Schale gelagert ist,
dass die piezo-elektrischen Antriebe (1a, 1b, 1c) im Innern der Kugel (2) angeordnet sind und dass eine Kraftübertragung von den piezo-elektrischen Antrieben (1a, 1b, 1c) auf die Innenseite der Schale vorgesehen ist.

4. Aktuator nach Anspruch 1 bis 3,
dadurch gekennzeichnet,
dass drei senkrecht aufeinander stehende Rotationsachsen (7a, 7b, 7c) vorhanden sind, dass drei piezo-elektrische Antriebe (1a, 1b, 1c) derart angesteuert werden, dass ein erster piezo-elektrischer Antrieb eine Rotationsbewegung um eine Rotationsachse ausführt, während ein zweiter Antrieb, dessen tangentiale Schwingungsebene parallel zu dieser Rotationsachse verläuft, mittels Longitudinalschwingungen die Reibung in dem zu dem zweiten Antrieb gehörenden Auflagepunkt der Kugel (2) reduziert und ein dritter in der Rotationsachse gelegener Antrieb in abgeschaltetem Zustand die Rotationsachse in dem zu dem dritten Antrieb gehörenden Auflagepunkt der Kugel (2) stabilisiert.

5. Aktuator nach Anspruch 1 bis 4,
dadurch gekennzeichnet,
dass eine von der Kugel (2) auf die piezo-elektrischen Antriebe (1a, 1b, 1c) einwirkende Anpresskraft vorgesehen ist, welche von der eigenen Gewichtskraft der Kugel (2), durch einen Magneten oder durch eine auf der zu drehenden Kugel (2) gelagerte zweite Kugel aufgebracht wird.

6. Anordnung zur Erfassung von Bild und/oder Ton mit einem Aktuator nach einem der Ansprüche 1 bis 5,
dadurch gekennzeichnet,
dass die Kugel (2) des Aktuators dazu vorgesehen ist, eine Kamera (3) und/oder ein Mikrofon aufzunehmen.
